# EUROPEAN PATENT SPECIFICATION

(11) **EP 3 953 915 B1**
(45) Date of publication and mention of the grant of the patent: **21.12.2022**
(21) Application number: 20735551.2
(22) Date of filing: 29.06.2020
(51) Int. Cl.: G08B 13/06, G08B 29/18, G08B 25/10, G08B 29/06

(54) **PERIPHERAL FOR AN ALARM SYSTEM INSTALLATION**
PERIPHERIEGERÄT FÜR EINE ALARMSYSTEMANLAGE
PÉRIPHÉRIQUE POUR INSTALLATION DE SYSTÈME D'ALARME

(30) Priority: 02.07.2019 ES 201930611
(43) Date of publication of application: 16.02.2022
(60) Divisional application: 21208517.9
(73) Proprietor: Verisure Sàrl, 1290 Versoix, Geneva (CH)
(72) Inventor: KRISTENSSON, Daniel, 1290 Versoix, Geneva (CH); HANSSON, Mikael, 1290 Versoix, Geneva (CH)
(74) Representative: Prinz & Partner mbB
(86) International application number: PCT/EP2020/068233
(87) International publication number: WO 2021/001308

(56) References cited:
- GB-A- 2 368 957
- US-A- 4 556 872
- US-A1- 2013 212 945

## Description

The invention relates to a peripheral which is intended to be part of an alarm system installation which is used for protecting a building.

The term "building" here refers to small businesses and homes. These can be houses or flats within a house.

The alarm system installation typically comprises a central unit and one or more peripherals. The central unit is typically mains powered and serves for external communication, e.g. for sending an alarm call to an operation center. The peripheral communicates with the central unit and is typically battery powered. It can be a sensor, a camera or a communication interface via which a user can communicate with the central unit, e.g. to arm or disarm the alarm system installation.

In order to prevent tampering with the peripheral, a tamper signal is sent from the peripheral to the central unit in the event that there is an unauthorized attempt to open the battery compartment.

For instance, GB 2 368 957 A shows a mains and battery powered adapter plug having a housing, batteries arranged in a compartment of the housing, and a tamper switch cooperating with a hinged cover. In its closed position, the cover is fixed to the body by means of a screw. In case a fail of the mains power or a tamper attempt is detected, a corresponding alarm signal is generated.

Sending a tamper signal however requires that the peripheral is (still) powered by the batteries. In a known construction, the battery slider is provided with sliding contacts which ensure that the peripheral remains connected to the batteries in the battery slider before the battery slider has been pulled out of the housing too far. For the majority of cases, this allows the peripheral to send out the tamper signal while respecting EN standards which require the tamper circuit to check there is no tamper every 400 ms. Should the battery slider however be pulled out very quickly, the connection to the batteries might be lost before a tamper signal has been sent out.

The object of the invention is to ensure that a tamper signal can be reliably sent out by the peripheral if there is an unauthorized attempt to remove the battery slider.

In order to solve this object, the invention provides a peripheral for an alarm system installation, having a housing, a battery compartment, a battery slider arranged within the battery compartment, a first latching arrangement securing the battery slider within the battery compartment and preventing access to the battery slider, a second latching arrangement securing the battery slider within the battery compartment, and a tamper switch cooperating with the first latching arrangement. The first latching mechanism is a cover which is connected to the housing and the battery slider is withdrawable from the battery compartment. One or more batteries are arranged within the battery slider, the one or more batteries being the power supply for the peripheral. The electrical connection between the batteries and electronic circuits within the housing is achieved via contact surfaces on the battery slider. The peripheral is adapted to check every 400 ms if the cover is still present and to send a tamper signal to a central unit of the alarm system installation in the event that there is an unauthorized attempt to open the battery compartment.

The invention is based on the general concept of providing two different hurdles which have to be overcome before the battery slider can be removed from the housing of the peripheral, thereby making it impossible to remove the battery slider (and therefore disconnect the peripheral from the power supply) before a tamper signal can be sent within the time frame of 400 ms. As soon as the cover is removed, the tamper switch changes its switching condition so that the tamper signal is sent out as soon as the next tamper check is performed.

The cover can be provided with a latching lever adapted to be pivoted between a latching and a release position, the latching lever locking the cover at the housing when in the latching position. The latching lever can have an actuating slot on the outside so that no dedicated tools are required to rotate it.

For cooperating with the tamper switch, the cover can have an actuation protrusion which cooperates with the tamper switch. As an alternative, the tamper switch can have a sensing protrusion which cooperates with the cover. In any case, the cooperation is such that the tamper switch changes its switching condition when the cover is removed from the housing.

According to a preferred embodiment, the second latching arrangement is a spring arm engaging at the battery slider. It has to be manually pressed so as to be moved out of the way of the battery slider before the battery slider can be withdrawn from the battery compartment. Thus, it is ensured that the combination of steps necessary before the power supply to the peripheral is disconnected, cannot be performed within 400 ms, in particular when the spring arm is arranged behind the cover so that the first and the second latching arrangements have to be "removed" one after the other.

The battery slider can have two removal tabs and the spring arm can be arranged between the removal tabs so that an operator needs both hands to remove the battery slider.

According to an embodiment, the battery slider is provided with two contact surfaces, each of the contact surfaces being contacted by a contact spring. The relative movement between the battery slider and the contact springs each time the batteries are replaced, make sure that there always is a reliable electrical connection between the contact surfaces and the contact spring.

The contact springs can be formed from bent wire which allows giving them a three-dimensional shape particularly suitable for being arranged in the limited space within the housing of the peripheral.

The invention will now be described with reference to an embodiment which is shown in the enclosed drawings. In the drawings,
- Figure 1 schematically shows an alarm system installation with a peripheral,
- Figure 2 schematically shows the peripheral in a top view,
- Figure 3 shows part of the peripheral of Figure 2 in a perspective view,
- Figure 4 shows a first step of removal of the battery slider from the housing of the peripheral,
- Figure 5 shows a detail of the peripheral,
- Figure 6 shows a second step of removal of the battery slider from the housing of the peripheral,
- Figure 7 shows the battery slider in a completely removed position,
- Figure 8 shows the electrical connection between the battery slider and the internal electrical components of the peripheral, and
- Figure 9 shows at an enlarged scale a detail of the electrical connection between the battery slider and the internal electrical connection of the peripheral.

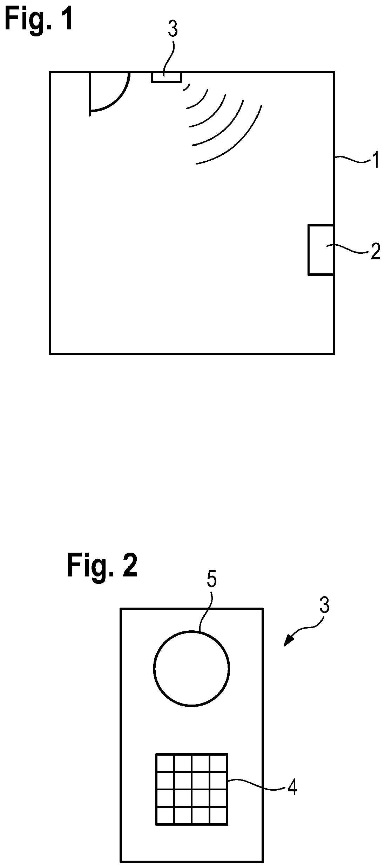

Fig. 1 shows a home alarm system installation in a building 1. The home alarm system installation comprises a central unit 2 which is typically mains powered and serves for external communication, e.g. for sending an alarm call to an operation center. Other functionality can be implemented as well.

The alarm system installation further comprises one or more peripherals. The peripherals communicate with the central unit and are typically battery powered.

One example of such peripheral is a communication interface 3 via which a user can communicate with the central unit, e.g. to arm or disarm the alarm system installation. To this end, the peripheral 3 can comprises keypad 4 and a loudspeaker 5.

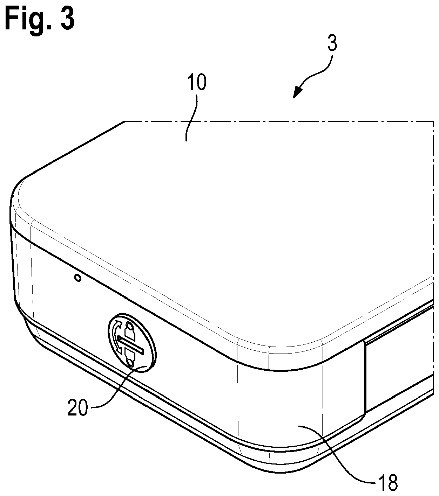

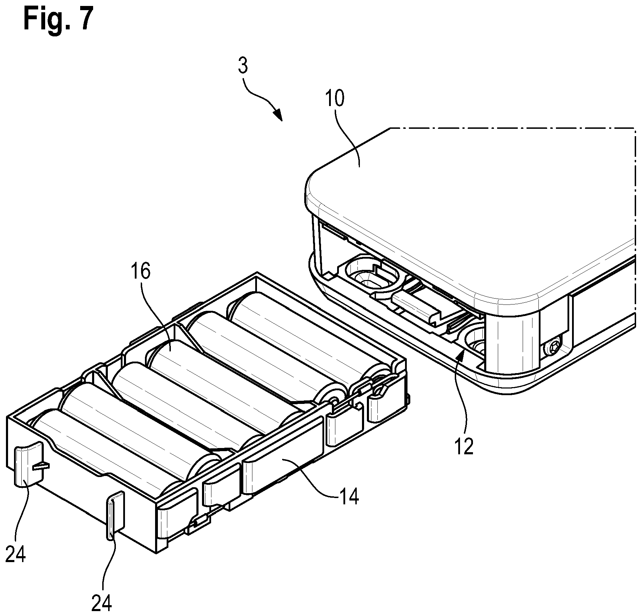

As can be seen in Figures 3 to 9, peripheral 3 comprises a housing within which a battery compartment 12 is formed. Battery compartment 12 accommodates a battery slider 14 within which one or more batteries 16 are arranged. The batteries are the power supply for the peripheral 3.

Housing 10 comprises a cover 18 which closes the battery compartment 12 (please see Figure 3).

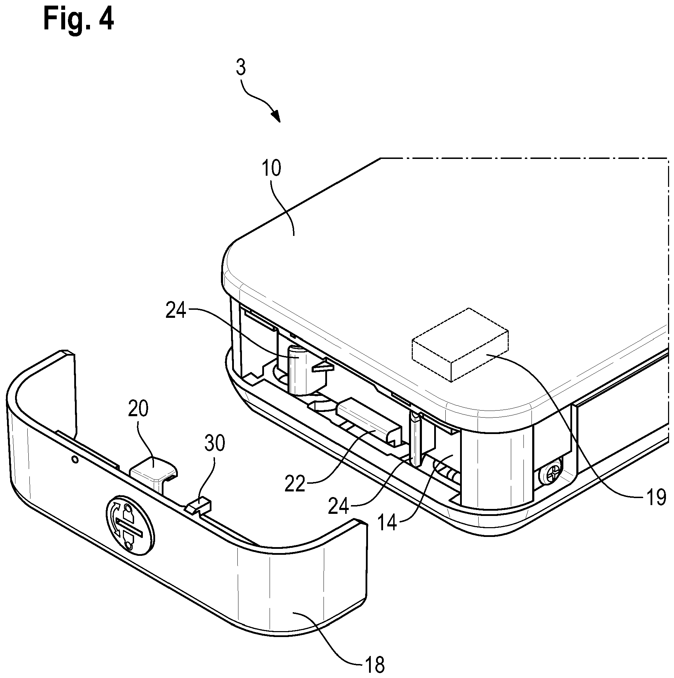

For connecting cover 18 to housing 10, a rotatable locking lever 20 is arranged at cover 18. In a latching position, locking lever 20 reliably connects cover 18 to housing 10. When the locking lever 20 has been pivoted to a release position, cover 18 can be removed from housing 10 so that access to the battery slider 14 is possible (please see Figure 4).

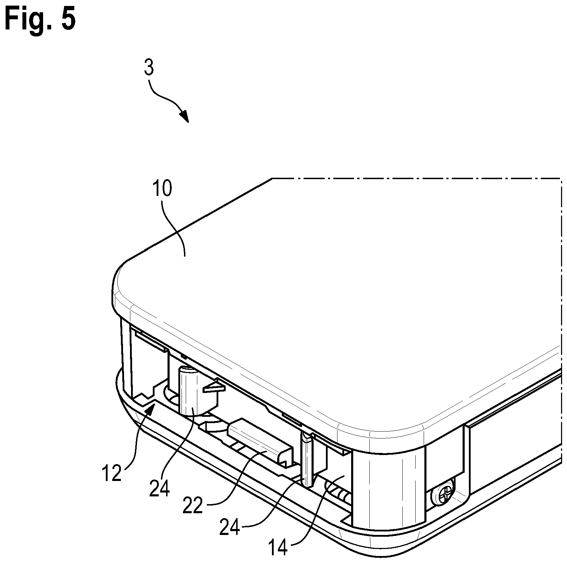

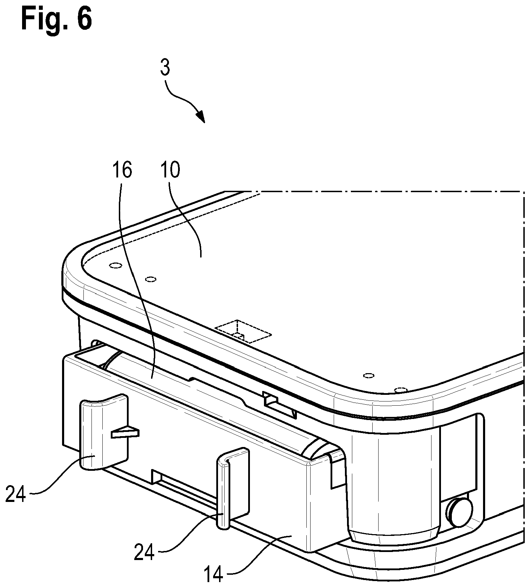

Within housing 10 and at an edge of battery compartment 12, a spring arm 22 (please see Figure 5) is arranged which is adapted from cooperating with battery slider 14 such that battery slider 14 can be withdrawn from battery compartment 12 only after spring arm 22 has been pushed to a position out of the way of battery slider 14 (please see Figure 6).

Battery slider 14 is provided with two removal tabs 24 which facilitate withdrawal of battery slider 14 from battery compartment 12.

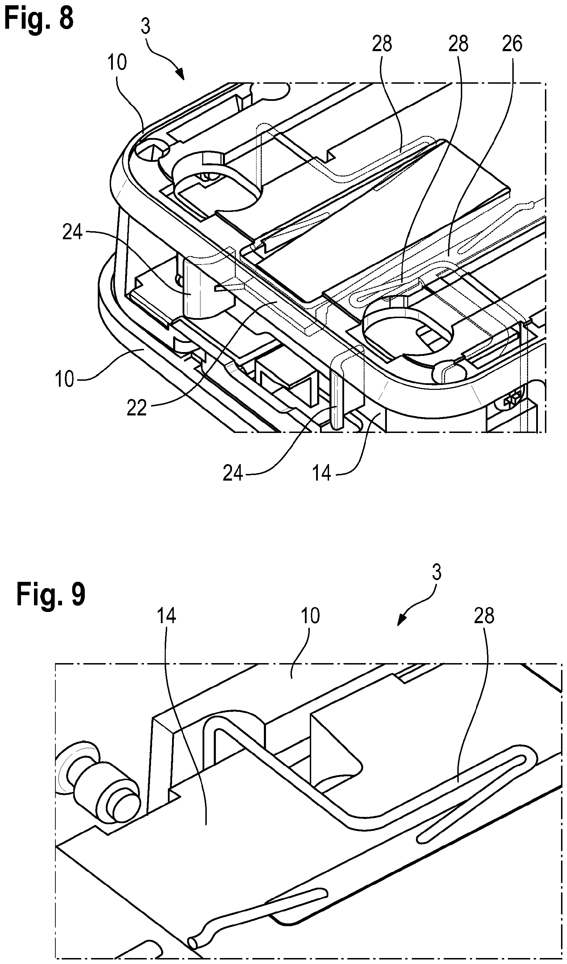

The electrical connection between batteries 16 and the electronic circuits within housing 10 of peripheral 3 is achieved via contact surfaces 26 on the underside of battery slider 14, at which contact springs 28 engage (please see Figure 8 and 9). Contact springs 28 are held stationary within housing 10.

In order to prevent tampering with the peripheral, a tamper signal is sent from the peripheral to the central unit in the event that there is an unauthorized attempt to open the battery compartment.

For peripheral 3, a tamper signal is being sent when cover 18 is no longer in the position in which it closes battery compartment 12. To this end, cover 18 is provided with an actuation protrusion 30 which cooperates with a tamper switch 19 arranged within housing 10. Tamper switch 19 detects if cover 18 is present in the position in which it prevents access to battery compartment 12.

The tamper switch can be of any construction, provided it is able to establish a change of the presence of the cover. One example is a conventional switch having a stationary and a moveable contact. Other examples are inductive structures, or structures which have a conducting element on the protrusion which establishes a contact between two contact pads on a PCB in the housing.

According to EN standards, it is being checked every 400 ms if cover 18 is still present. As a result of the provision of cover 18 and spring arm 22, it is ensured that it is not possible to remove battery slider 14 (and thereby cut off the power supply for peripheral 3) within a time period which is shorter than 400 ms. Cover 18 is a first latching arrangement for battery slider 14, and spring arm 22 is a second latching arrangement for battery slider 14. Thus, both latching arrangement have to be removed before battery slider 14 can be withdrawn from battery compartment 12.

## Claims

1. A peripheral (3) for an alarm system installation, having a housing (10), a battery compartment (12), a first latching arrangement (18), and a tamper switch (19) cooperating with the first latching arrangement (18), wherein the first latching arrangement is a cover (18) which is connected to the housing (10),
**characterized by** a battery slider (14) arranged within the battery compartment (12) and being withdrawable from the battery compartment (12), wherein the first latching arrangement (18) secures the battery slider (14) within the battery compartment (12) and prevents access to the battery slider (14), and
by a second latching arrangement (22) securing the battery slider (14) within the battery compartment (12),
wherein one or more batteries (16) are arranged within the battery slider (14), the one or more batteries (16) being the power supply for the peripheral (3), wherein the electrical connection between the batteries (16) and electronic circuits within the housing (10) is achieved via contact surfaces (26) on the battery slider (14), and
wherein the peripheral (3) is adapted to check every 400 ms if the cover (18) is still present and to send a tamper signal to a central unit of the alarm system installation in the event that there is an unauthorized attempt to open the battery compartment (12).

2. The peripheral (3) of claim 1 wherein the cover (18) is provided with a latching lever (20) adapted to be pivoted between a latching and a release position, the latching lever (20) locking the cover (18) at the housing (10) when in the latching position.

3. The peripheral (3) of claim 1 or claim 2 wherein the cover (18) has an actuation protrusion (30) which cooperates with the tamper switch (19).

4. The peripheral (3) of claim 1 or claim 2 wherein the tamper switch (19) has a sensing protrusion (30) which cooperates with the cover (18).

5. The peripheral (3) of any of the preceding claims wherein the second latching arrangement (22) is a spring arm engaging at the battery slider (14).

6. The peripheral (3) of claim 5 wherein the spring arm (22) is arranged behind the cover (18).

7. The peripheral (3) of claim 6 wherein the battery slider (14) has two removal tabs (24) and the spring arm (22) is arranged between the removal tabs (24).

8. The peripheral (3) of any of the preceding claims wherein the battery slider (14) is provided with two contact surfaces (26), each of the contact surfaces (26) being contacted by a contact spring (28).

9. The peripheral (3) of claim 8 wherein the contact springs (28) are bent wire springs.

## Patentansprüche

1. Peripheriegerät (3) für eine Alarmsystemanlage, mit einem Gehäuse (10), einem Batteriefach (12), einer ersten Rastanordnung (18) und einem mit der ersten Rastanordnung (18) zusammenwirkenden Sabotageschalter (19), wobei die erste Rastanordnung eine Abdeckung (18) ist, die mit dem Gehäuse (10) verbunden ist,
**gekennzeichnet durch** einen Batterieschieber (14), der in dem Batteriefach (12) angeordnet und aus dem Batteriefach (12) herausziehbar ist, wobei die erste Rastanordnung (18) den Batterieschieber (14) in dem Batteriefach (12) sichert und einen Zugang zu dem Batterieschieber (14) verhindert, und
durch eine zweite Rastanordnung (22), die den Batterieschieber (14) in dem Batteriefach (12) sichert,
wobei in dem Batterieschieber (14) eine oder mehrere Batterien (16) angeordnet sind, wobei die eine oder die mehreren Batterien (16) die Stromversorgung für das Peripheriegerät (3) sind, wobei die elektrische Verbindung zwischen den Batterien (16) und elektronischen Schaltungen innerhalb des Gehäuses (10) über Kontaktflächen (26) an dem Batterieschieber (14) erreicht wird, und
wobei das Peripheriegerät (3) so ausgebildet ist, dass es alle 400 ms überprüft, ob die Abdeckung (18) noch vorhanden ist, und im Falle eines unberechtigten Versuchs, das Batteriefach (12) zu öffnen, ein Sabotagesignal an eine Zentraleinheit der Alarmsystemanlage sendet.

2. Peripheriegerät (3) nach Anspruch 1, bei dem die Abdeckung (18) mit einem Rasthebel (20) versehen ist, der zwischen einer Rast- und einer Lösestellung verschwenkt werden kann, wobei der Rasthebel (20) in der Raststellung die Abdeckung (18) am Gehäuse (10) verriegelt.

3. Peripheriegerät (3) nach Anspruch 1 oder Anspruch 2, bei dem die Abdeckung (18) einen Betätigungsvorsprung (30) aufweist, der mit dem Sabotageschalter (19) zusammenwirkt.

4. Peripheriegerät (3) nach Anspruch 1 oder Anspruch 2, bei dem der Sabotageschalter (19) einen Sensorvorsprung (30) aufweist, der mit der Abdeckung (18) zusammenwirkt.

5. Peripheriegerät (3) nach einem der vorhergehenden Ansprüche, bei dem die zweite Rastanordnung (22) ein Federarm ist, der an dem Batterieschieber (14) angreift.

6. Peripheriegerät (3) nach Anspruch 5, bei dem der Federarm (22) hinter der Abdeckung (18) angeordnet ist.

7. Peripheriegerät (3) nach Anspruch 6, bei dem der Batterieschieber (14) zwei Entnahmezungen (24) aufweist und der Federarm (22) zwischen den Entnahmezungen (24) angeordnet ist.

8. Peripheriegerät (3) nach einem der vorhergehenden Ansprüche, bei dem der Batterieschieber (14) mit zwei Kontaktflächen (26) versehen ist, wobei jede der Kontaktflächen (26) von einer Kontaktfeder (28) kontaktiert wird.

9. Peripheriegerät (3) nach Anspruch 8, bei dem die Kontaktfedern (28) Biegedrahtfedern sind.

## Revendications

1. Périphérique (3) pour une installation de système d'alarme, présentant un boîtier (10), un compartiment de batterie (12), un premier agencement d'enclenchement (18), et un commutateur de sabotage (19) coopérant avec le premier agencement d'enclenchement (18), le premier agencement d'enclenchement étant un recouvrement (18) qui est relié au boîtier (10),
**caractérisé par** un coulisseau de batterie (14) agencé à l'intérieur du compartiment de batterie (12) et étant apte à être extrait du compartiment de batterie (12), le premier agencement d'enclenchement (18) immobilisant le coulisseau de batterie (14) à l'intérieur du compartiment de batterie (12) et empêchant l'accès au coulisseau de batterie (14), et
par un deuxième agencement d'enclenchement (22) immobilisant le coulisseau de batterie (14) à l'intérieur du compartiment de batterie (12),
une ou plusieurs batteries (16) étant agencées à l'intérieur du coulisseau de batterie (14), ladite une ou lesdites plusieurs batteries (16) étant l'alimentation électrique pour le périphérique (3), la liaison électrique entre les batteries (16) et des circuits électroniques à l'intérieur du boîtier (10) étant réalisée par des surfaces de contact (26) sur le coulisseau de batterie (14), et
le périphérique (3) étant apte à vérifier toutes les 400 ms si le recouvrement (18) est toujours présent, et à envoyer un signal de sabotage à une unité centrale de l'installation de système d'alarme dans le cas d'une tentative non autorisée d'ouverture du compartiment de batterie (12).

2. Périphérique (3) selon la revendication 1, le recouvrement (18) étant pourvu d'un levier d'enclenchement (20) apte à pivoter entre une position d'enclenchement et une position de dégagement, le levier d'enclenchement (20) verrouillant le recouvrement (18) sur le boîtier (10) lorsqu'il se trouve dans la position d'enclenchement.

3. Périphérique (3) selon la revendication 1 ou la revendication 2, le recouvrement (18) présentant une saillie d'actionnement (30) qui coopère avec le commutateur de sabotage (19).

4. Périphérique (3) selon la revendication 1 ou la revendication 2, le commutateur de sabotage (19) présentant une saillie de détection (30) qui coopère avec le recouvrement (18).

5. Périphérique (3) selon l'une des revendications précédentes, le deuxième agencement d'enclenchement (22) étant un bras à ressorts s'engageant sur le coulisseau de batterie (14).

6. Périphérique (3) selon la revendication 5, le bras à ressorts (22) étant agencé derrière le recouvrement (18).

7. Périphérique (3) selon la revendication 6, le coulisseau de batterie (14) présentant deux pattes de retrait (24), et le bras à ressorts (22) étant agencé entre les pattes de retrait (24).

8. Périphérique (3) selon l'une des revendications précédentes, le coulisseau de batterie (14) étant pourvu de deux surfaces de contact (26), chacune des surfaces de contact (26) étant contactée par un ressort de contact (28).

9. Périphérique (3) selon la revendication 8, les ressorts de contact (28) étant des ressorts de fil plié.
